(19) Europäisches Patentamt
European Patent Office
Office européen des brevets

(11) **EP 3 951 485 A1**

(12) **EUROPEAN PATENT APPLICATION**
published in accordance with Art. 153(4) EPC

(43) Date of publication:
**09.02.2022 Bulletin 2022/06**

(21) Application number: **20782072.1**

(22) Date of filing: **21.03.2020**

(51) International Patent Classification (IPC):
**G02C 7/12** *(2006.01)*    **G02B 5/30** *(2006.01)*
**G02C 7/06** *(2006.01)*

(52) Cooperative Patent Classification (CPC):
**G02B 5/30; G02C 7/06; G02C 7/12**

(86) International application number:
**PCT/JP2020/012565**

(87) International publication number:
**WO 2020/203382 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019069074**

(71) Applicant: **Hoya Lens Thailand Ltd.
Pathumthani 12130 (TH)**

(72) Inventor: **INABA Tsuyoshi
Tokyo 160-8347 (JP)**

(74) Representative: **Hoffmann Eitle
Patent- und Rechtsanwälte PartmbB
Arabellastraße 30
81925 München (DE)**

(54) **POLARIZED LENS AND MANUFACTURING METHOD THEREOF**

(57)    An object of the present invention is to provide a polarizing lens in which a polarizing function differs depending on the region of the surface of the lens.

The present invention provides a polarizing lens that includes a polarizing layer on a lens base material and that includes a region in the surface of the lens in which the degree of polarization caused by the polarizing layer continuously differs or a region in the surface of the lens in which the film thickness of the polarizing layer continuously differs.

Fig. 1

## Description

Technical Field

The present invention relates to polarizing lenses and manufacturing methods therefor.

Background Art

Conventionally, polarizing plastic lens for eyeglasses are known that block light which is reflected off a water surface or the like and which has a predetermined polarization direction. As techniques for providing a polarizing function to eyeglass lenses, patent literature 1 discloses a technique for coating the top of a lens base material with a coating liquid containing a dichroic pigment so as to form a polarizing layer, and patent literatures 2 and 3 and the like disclose techniques for forming a lens base material layer on each of the front and back surfaces of a polarizing film by insert molding so as to manufacture a polarizing lens in which the polarizing film is embedded within the lens (in general, the techniques are called a cast polymerization method or a casting method).

The polarizing layer and the polarizing film described above each have a function serving as a polarizing film, and as the degree of polarization is increased, unnecessary light is further cut, and thus dazzle and glare are reduced, with the result that clear view is obtained.

Citation List

Patent Literature

Patent Literature 1: Japanese Patent No. 5555688
Patent Literature 2: Japanese Unexamined Patent Application Publication No. 2015-069045
Patent Literature 3: International Publication No. 2014/021466

Summary of Invention

Technical Problem

In the conventional techniques, the polarizing layer and the polarizing film described above have a uniform film thickness in the entire surface, and an eyeglass lens including the polarizing layer and the polarizing film as described above has a uniform polarizing function in the entire surface. However, when the eyeglass lenses are worn and a distant area is seen, the eyeglass lenses have the polarizing function to obtain satisfactory view whereas when a near area such as an area within reach of a hand is seen, since the eyeglass lenses have the polarizing function, it is disadvantageously difficult to see the near area. This is because when the near area is seen, a target to be seen is characters or the screen of a portable terminal or detailed work is performed, and thus when the transmittance of the lenses is lowered by the polarizing function, dark view is provided, with the result that it is difficult to clearly see the target to be seen. In recent years, bifocal lenses are widely used, and since the bifocal lens as described above has a region where a distant area is clearly seen and a region where a near area is clearly seen, for example, when a high polarizing function is provided even in a region where an area close to the lens is clearly seen, the same disadvantage as described above occurs.

Hence, the present invention is made in view of the conventional problem as described above. Firstly, an object thereof is to provide a polarizing lens in which the degree of polarization differs depending on the region of the surface of the lens, and secondly, an object thereof is to provide a method for manufacturing such a polarizing lens.

Solution to Problem

The present inventors have conducted thorough studies in order to solve the problem described above, and thereby find that the problem described above can be solved by providing configurations below. In other words, in order to solve the problem described above, the present invention provides the configurations below.

(Configuration 1)

A polarizing lens includes a polarizing layer on a lens base material, and the polarizing lens includes: a region in a surface of the lens, the region being such that the degree of polarization caused by the polarizing layer continuously differs.

(Configuration 2)

A polarizing lens includes a polarizing layer on a lens base material, and the polarizing lens includes: a region in a surface of the lens, the region being such that the film thickness of the polarizing layer continuously differs.

(Configuration 3)

In the polarizing lens described in configuration 1 or 2, the lens is a unifocal lens or a progressive power lens.

(Configuration 4)

In the polarizing lens described in any one of configurations 1 to 3, the degree of polarization in an upper region of the lens is higher than the degree of polarization in a lower region.

(Configuration 5)

In the polarizing lens described in any one of configurations 1 to 4, in a state where the lens is framed in an eyeglass frame, the degree of polarization of the lens in at least part of a lower third region in a vertical width from an upper end to a lower end of the frame is equal to or greater than 0% and less than 70%.

(Configuration 6)

In the polarizing lens described in any one of configurations 1 to 5, the transmittance of the lens in a wavelength region of 380 to 780 nm is equal to or greater than 25%.

(Configuration 7)

A method for manufacturing a polarizing lens including a polarizing layer on a lens base material includes: forming the polarizing layer by a dip coating method; and dipping the lens base material in a polarizing pigment solution containing a polarizing pigment and then changing a raising speed when the lens base material is raised so as to form the polarizing layer in which a film thickness in the surface of the lens differs in a raising direction.

(Configuration 8)

In the method for manufacturing a polarizing lens described in configuration 7, the lens base material is raised at constant acceleration.

(Configuration 9)

In the method for manufacturing a polarizing lens described in configuration 7 or 8, the lens base material is raised at the raising speed equal to or greater than 0.1 mm/second and equal to or less than 100 mm/second.

(Configuration 10)

In the method for manufacturing a polarizing lens described in any one of configurations 7 to 9, the concentration of the polarizing pigment in the polarizing pigment solution is equal to or greater than 1% by weight and equal to or less than 5% by weight.

(Configuration 11)

In the method for manufacturing a polarizing lens described in any one of configurations 7 to 10, the liquid temperature of the polarizing pigment solution is equal to or greater than 40° and equal to or less than 80°.

Advantageous Effects of Invention

According to the present invention, it is possible to provide a polarizing lens in which since a polarizing function differs depending on the region of the surface of the lens, it is possible to obtain satisfactory view, for example, both when eyeglass lenses are worn and a distant area is seen and when a near area such as an area within reach of a hand is seen.

According to the present invention, it is also possible to provide a manufacturing method suitable for manufacturing of the polarizing lens of the present invention.

Brief Description of Drawings

Fig. 1 is a plan view of a polarizing lens according to the present invention;
Fig. 2 shows a first embodiment of the polarizing lens according to the present invention, Fig. 2(a) is a schematic view showing a relationship between the position of the surface of the lens and the degree of polarization and Fig. 2(b) is a schematic view showing a relationship between the position of the surface of the lens and the film thickness of a polarizing layer;
Fig. 3 shows a second embodiment of the polarizing lens according to the present invention, Fig. 3(a) is a schematic view showing a relationship between the position of the surface of the lens and the degree of polarization and Fig. 3(b) is a schematic view showing a relationship between the position of the surface of the lens and the film thickness of a polarizing layer;
Fig. 4 shows a third embodiment of the polarizing lens according to the present invention, Fig. 4(a) is a schematic view showing a relationship between the position of the surface of the lens and the degree of polarization and Fig. 4(b) is a schematic view showing a relationship between the position of the surface of the lens and the film thickness of a polarizing layer;
Fig. 5 shows a fourth embodiment of the polarizing lens according to the present invention, Fig. 5(a) is a schematic view showing a relationship between the position of the surface of the lens and the degree of polarization and Fig. 5(b) is a schematic view showing a relationship between the position of the surface of the lens and the film thickness of a polarizing layer;
Fig. 6 is a plan view in a state where the lens is framed in an eyeglass frame;
Fig. 7 is a plan view in a state where a lens is framed in an eyeglass frame;
Fig. 8 is a schematic view of a dip coating method;
Figs. 9(a) to 9(d) each are schemes (schematic views) showing relationships between the position of the surface of the lens and the speed of raising the lens in the embodiments of the present invention;
Fig. 10(a) is a schematic view showing a relationship between the position of the surface of a polarizing lens in a reference example and the degree of polarization, and Fig. 10(b) is a schematic view showing a relationship between the position of the surface of the lens and the film thickness of a polarizing layer; and
Fig. 11 is a scheme (schematic view) showing a relationship between the position of the surface of the lens and the speed of raising the lens in the reference example.

Description of Embodiments

Embodiments for performing the present invention will be described in detail below with reference to drawings.

[Polarizing lens]

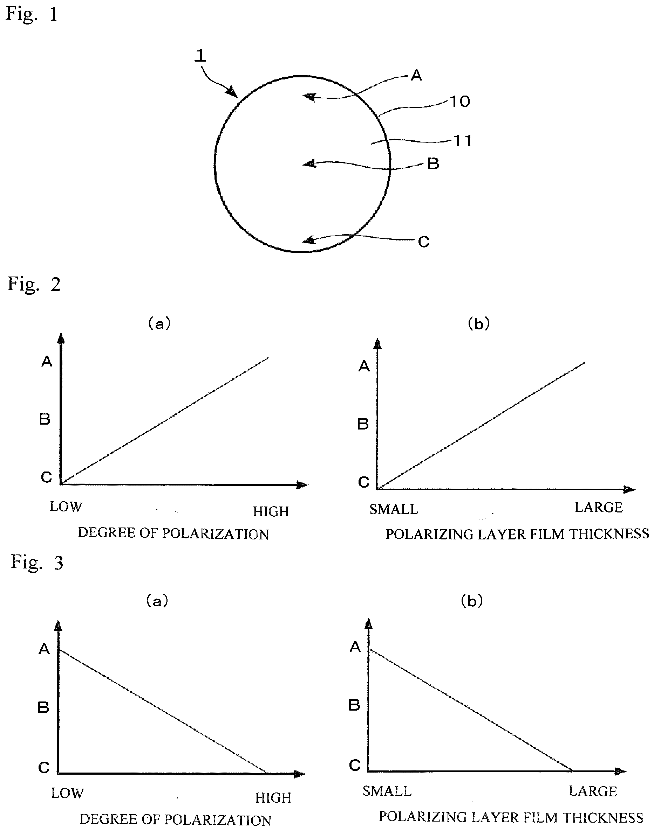

Fig. 1 is a plan view of a polarizing lens according to the present invention.

As shown in Fig. 1, the polarizing lens 1 according to the present invention includes a polarizing layer 11 on a lens base material 10.

The polarizing lens 1 according to the present invention may be any one of a unifocal lens, a multifocal lens, a progressive power lens (so-called bifocal lens) and the like. In the unifocal lens, in general, a region including a line-of-sight passing point on the lens when a distant object, for example, an object whose object distance is equal to or greater than 5 m is seen is included in an upper region, and a region including a line-of-sight passing point on the lens when eyeballs are turned downward to see a close object is included in a lower region. In the progressive power lens, in general, a reading portion region (reading portion) is included in a lower region, and a distance portion region (distance portion) is included in an upper region.

The polarizing lens 1 according to the present invention may be a sunglass lens in which the power of the lens is generally zero.

<Lens base material>

The lens base material 10 includes a first main surface (object-side surface which is a convex surface), a second main surface (eyeball-side surface) and an edge surface (edge portion).

Although the material of the lens base material 10 may be a plastic or an inorganic glass, various base materials which are generally used as plastic lenses can be used. The lens base material can be manufactured by injecting a lens monomer into a lens forming mold and performing curing treatment.

The lens monomer is not particularly limited, and various types of monomers which are generally used for manufacturing of plastic lenses can be used. For example, lens monomers which include, in molecules, a benzene ring, a naphthalene ring, an ester bond, a carbonate bond and a urethane bond can be used. Compounds including sulfur and halogen elements can also be used, and in particular, a compound including a nuclear halogen-substituted aromatic ring can also be used. The lens monomer can be manufactured by using one or two or more types of monomers including the functional groups described above. Examples thereof include styrene, divinylbenzene, phenyl (meth) acrylate, benzyl (meth) acrylate, naphthyl (meth) acrylate, methyl (meth) acrylate, diethylene glycol bisallyl carbonate, diallyl (iso) phthalate, dibenzylitaconate, dibenzylfumarate, chlorostyrene, nuclear halogen-substituted styrene, nuclear halogen-substituted phenyl (meth) acrylate, nuclear halogen-substituted benzyl (meth) acrylate, (di) (meth) acrylate of tetrabromobisphenol A derivative, diallyl carbonate of tetrabromobisphenol A derivative, dioltochlorobenzyl itakonate, dioltochlorobenzyl fumarate, diethylene glycol bis (orthochlorobenzyl) fumarate, (di) ethylene glycol di (meth) acrylate, glycidyl methacrylate, reactants of polyfunctional isocyanates such as xylylene diisocyanate and hexamethylene diisocyanate, a reactant of monohydroxyacrylate of nuclear halogen-substituted phenol derivative and polyfunctional isocyanate, a reactant of monohydroxyacrylate of nuclear halogen-substituted biphenyl derivative and polyfunctional isocyanate, a reactant of xylene diisocyanate and polyfunctional mercaptan, a reactant of glycidyl methacrylate and polyfunctional methacrylate and the like and mixtures thereof. Preferable examples of the material of the lens base material include polyurethane-based materials such as polythiourethane resin and polyurethane resin, epithio-based materials such as polysulfide resin, polycarbonate-based materials, diethylene glycol bisallyl carbonate-based materials and the like.

Although a colorless lens base material is generally used as the lens base material 10, a colored lens base material can be used as long as it does not impair transparency.

The refractive index of the lens base material 10 is, for example, equal to or greater than 1.50 and equal to or less than 1.74.

As the lens base material 10, either of a finished lens and a semi-finished lens may be used.

The finished lens means a lens in which a lens object-side surface (in general, a convex surface) and an eyeball-side surface (in general, a concave surface) are mirror optical surfaces that satisfy the power of a prescription lens and in which it is not necessary to perform curved surface processing on the optical surfaces. The finished lens is assumed to include a lens after oval processing is performed according to an eyeglass frame and a lens before the oval processing is performed. The object-side surface of the lens refers to a target-side surface among the surfaces configuring the lens which is visually recognized when the lenses are worn as eyeglasses, and the eyeglass-side surface of the lens refers to a surface among the surfaces configuring the lens which is on the side of the eyeballs of a wearer when the lenses are worn as eyeglasses.

On the other hand, although the semi-finished lens generally has a meniscus shape in which one surface is a convex surface and the other surface is a concave surface, the semi-finished lens does not have an eyesight correction function and includes the optical surfaces in which only the convex surface of the lens is mirror-finished and in which the concave surface is an unprocessed surface. The thickness of the lens is designed to have an allowance to be removed by processing such that the side of a lens manufacturer can produce the lens having the eyesight correction function by performing surface processing (such as grinding, cutting and polishing) on the side of the concave surface according to the prescription power of the lens.

Although, for example, the object-side surface shape of the lens base material 10 is the convex surface, the surface shape of the lens base material 10 is not particularly limited, and may be any one of a flat surface, a convex surface, a concave surface and the like.

<Polarizing layer>

The polarizing layer 11 is a layer which generates a polarizing function, and is formed, in the present invention, by coating the top of the lens base material 10 with a coating liquid containing a polarizing pigment such as a dichroic pigment by a dip coating method. The details of a method for forming the polarizing layer 11 will be described later.

Fig. 2 shows a first embodiment of the polarizing lens according to the present invention, Fig. 2(a) is a schematic view showing a relationship between the position of the surface of the lens and the degree of polarization and Fig. 2(b) is a schematic view showing a relationship between the position of the surface of the lens and the film thickness of the polarizing layer.

In the following description, for ease of description, it is assumed that in the surface of the polarizing lens of the present invention (hereinafter also simply referred to as the "lens of the present invention") 1, a region in the vicinity of an upper end is referred to as an "A region", a region in the vicinity of a lower end is referred to as a "C region" and an approximate intermediate region between the upper end and the lower end is referred to as a "B region" (see Fig. 1). It is also assumed that in the surface of the lens 1 of the present invention, a region higher than the B region is referred to as the "upper region of the lens", a region lower than the B region is referred to as the "lower region of the lens" and a region between the upper region and the lower region of the lens is referred to as the "intermediate region of the lens". Hence, the A region is included in the upper region of the lens, the C region is included in the lower region of the lens and the B region is included in the intermediate region of the lens.

The points described above are the same as in the embodiments of the present invention which will be described below.

As shown in Fig. 2(a), in the polarizing lens of the present embodiment, the degree of polarization in the A region is the highest, the degree of polarization is lowered as its surface extends from the B region to the C region and the degree of polarization in the C region is the lowest. In the present embodiment, the degree of polarization caused by the regions is linearly changed. In other words, the polarizing lens of the present embodiment includes, in the surface of the lens, a region in which the degree of polarization caused by the polarizing layer 11 continuously differs.

In the polarizing lens of the present embodiment, since the polarizing function differs depending on the region of the surface of the lens, satisfactory view is obtained, for example, both when eyeglass lenses are worn and a distant area is seen and when a near area such as an area within reach of a hand is seen.

When the lenses are worn as eyeglasses and a distant area is seen, since in general, a target is visually recognized from the upper region of the lens through the intermediate region, in this region, visibility is satisfactory in a case where the degree of polarization of the lens is high. On the other hand, when eyeglasses are worn and a near area such as an area within reach of a hand is seen, since in general, a target is visually recognized through the lower region of the lens, in this region, visibility is satisfactory in a case where the degree of polarization of the lens is low or polarization is not provided. From this point of view, it is desirable that the degree of polarization in the upper region of the lens be higher than the degree of polarization in the lower region, and that in other words, the degree of polarization in the lower region of the lens be lower than the degree of polarization in the upper region.

In the lens of the present embodiment, for example, the degree of polarization in the upper region of the lens is preferably equal to or greater than 80%.

For example, the degree of polarization in the lower region of the lens is preferably less than 70%, and more preferably less than 20%, and a case where the degree of polarization is 0% (polarization is not provided) is included.

The values of the degree of polarization described above are assumed to be values that are measured by a method described in examples which will be described later.

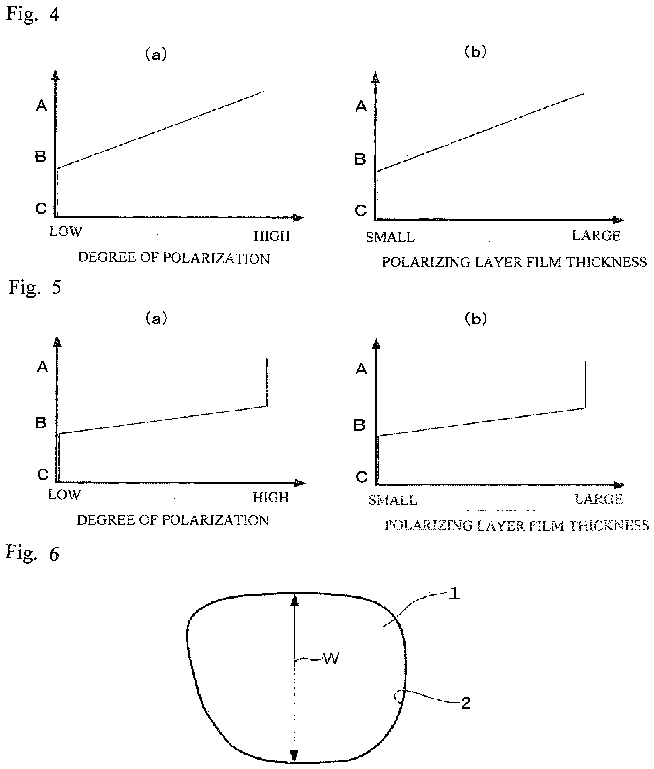

Fig. 6 is a plan view in a state where the lens is framed in an eyeglass frame. In the figure, reference sign 2 represents the eyeglass frame.

As described above, in general, it is preferable that the degree of polarization in the lower region of the lens be low or that no polarization be provided therein. For example, as shown in Fig. 6, in a state where the lens 1 of the present invention is framed in the eyeglass frame 2, the degree of polarization of the lens in a lower third (1/3) region in a vertical width (w in the figure) from the upper end to the lower end of the frame 2 is preferably equal to or greater than 0% and less than 70%, and more preferably equal to or greater than 0% and less than 20%. The same is true even when the lens in this case is, for example, a unifocal lens or a progressive power lens (so-called bifocal lens).

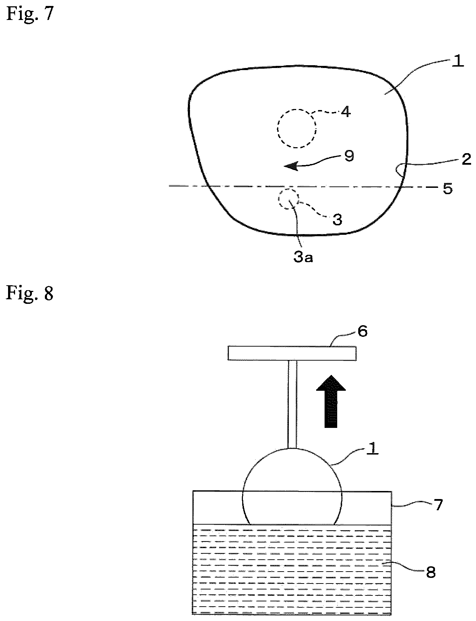

As with Fig. 6, Fig. 7 is a plan view in a state where a lens is framed in an eyeglass frame. The equivalent parts to those of Fig. 6 are identified with the same reference signs.

The lens in this case is a progressive power lens. Reference sign 4 in the figure represents a distance part which is included in the upper region of the lens and through which a distant area is clearly seen. Reference sign 3 represents a reading part which is included in the lower region of the lens and which has the power of the lens for seeing a near area. Reference sign 9 represents a progressive zone part which is intermediate between the distance part 4 and the reading part 3 and in which the power of the lens is gradually lowered as its surface extends downward.

When the lens 1 of the present invention is a progressive power lens, in a region below a horizontal line 5 (see Fig. 7), for example, 4 mm higher than a reading power measurement reference point 3a in the center of the reading part 3, the degree of polarization of the lens is preferably equal to or greater than 0% and less than 70%, and more preferably equal to or greater than 0% and less than 20%. In the case of the progressive power lens, the degree of polarization in this region falls in a range equal to or greater than 0% and less than 20%, and thus in particular, it is easy to see a near area through the reading portion, with the result that this configuration is desirable.

When the radius of a measurement circle surrounding the reading power measurement reference point is 3 mm, the position of the horizontal line 5 (see Fig. 7) may be located 3 mm higher than the reading power measurement reference point 3a. As described above, in the case of the progressive power lens, the lower region of the lens may be a region below the horizontal line in contact with the upper end of the measurement circle surrounding the reading power measurement reference point.

As described above, in the polarizing lens 1 of the present invention, the polarizing layer 11 is formed by coating the top of the lens base material 10 with the coating liquid containing the polarizing pigment such as the dichroic pigment by the dip coating method. The degree of polarization of the polarizing layer 11 formed as described above is changed by the film thickness thereof. As the film thickness of the polarizing layer 11 is increased, the degree of polarization is increased whereas as the film thickness of the polarizing layer 11 is decreased, the degree of polarization is lowered.

As shown in Fig. 2(b), in the polarizing lens of the present embodiment, the film thickness of the polarizing layer 11 in the A region is the largest, the film thickness is decreased as the surface extends from the B region to the C region and the film thickness of the polarizing layer 11 in the C region is the smallest. In the present embodiment, the film thickness of the polarizing layer 11 in the regions is linearly changed. In other words, the polarizing lens of the present embodiment includes, in the surface of the lens, a region in which the film thickness of the polarizing layer 11 continuously differs. As understood from Figs. 2(a) and 2(b), the change in the film thickness of the polarizing layer 11 shown in Fig. 2(b) corresponds to the change in the degree of polarization caused by the polarizing layer 11 shown in Fig. 2(a).

One of the features of the present invention is that in the surface of the polarizing lens 1 of the present embodiment, the degree of polarization caused by the polarizing layer 11 or the film thickness of the polarizing layer 11 is continuously changed. In the present embodiment, since as shown in Figs. 2(a) and 2(b) described above, the degree of polarization caused by the polarizing layer 11 or the film thickness of the polarizing layer 11 is continuously changed in the regions of the surface of the lens, for example, when the lenses of the present embodiment are worn as eyeglasses and a distant area is seen or when a near area such as an area within reach of a hand is seen, discomfort in visibility caused by a step (boundary) of the degree of polarization is not caused, with the result that satisfactory view is obtained in either case. The film thickness of the polarizing layer 11 is continuously changed, and thus the appearance of the surface of the lens is satisfactory.

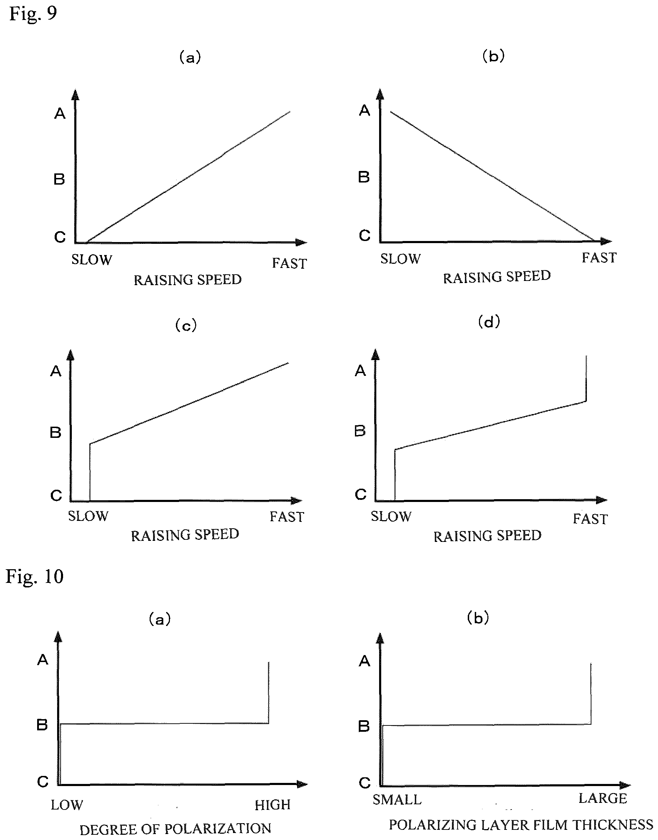

Fig. 10(a) is a schematic view, in a polarizing lens in a reference example, showing a relationship between the position of the surface of the lens and the degree of polarization, and Fig. 10(b) is a schematic view showing a relationship between the position of the surface of the lens and the film thickness of a polarizing layer.

As compared with the embodiment of the present invention described above, in the reference example as shown in Fig. 10(a), for example, a step of the degree of polarization is present in the B region of the surface of the lens, the degree of polarization is high and constant in a region higher than the B region and the degree of polarization is low and constant in a region lower than the B region. In the reference example, discomfort in visibility caused by the step (boundary) of the degree of polarization as described above is caused. As shown in Fig. 10(b), a step of the film thickness of the polarizing layer 11 is present in an approximate center, and thus a boundary caused by the step is seen to be linear, with the result that the appearance of the surface of the lens is not satisfactory.

Fig. 3 shows a second embodiment of the polarizing lens according to the present invention, Fig. 3(a) is a schematic view showing a relationship between the position of the surface of the lens and the degree of polarization and Fig. 3(b) is a schematic view showing a relationship between the position of the surface of the lens and the film thickness of a polarizing layer.

As shown in Fig. 3(a), in the polarizing lens of the present embodiment, the degree of polarization in the A region is the lowest, the degree of polarization is increased as its surface extends from the B region to the C region and the degree of polarization in the C region is the highest. In the present embodiment, the degree of polarization in the regions is also linearly changed. In other words, the polarizing lens of the present embodiment also includes, in the surface of the lens, a region in which the degree of polarization caused by the polarizing layer 11 continuously differs.

As shown in Fig. 3(b), in the polarizing lens of the present embodiment, the film thickness of the polarizing layer 11 in the A region is the smallest, the film thickness is increased as its surface extends from the B region to the C region and the film thickness of the polarizing layer 11 in the C region is the largest. In the present embodiment, the film thickness of the polarizing layer 11 in the regions is also linearly changed. In other words, the polarizing lens of the present embodiment also includes, in the surface of the lens, a region in which the film thickness of the polarizing layer 11 continuously differs. The change in the film thickness of the polarizing layer 11 shown in Fig. 3(b) as described above corresponds to the change in the degree of polarization caused by the polarizing layer 11 shown in Fig. 3(a).

Unlike the first embodiment described above, the polarizing lens of the present embodiment described above is suitable for applications in which the degree of polarization in the upper region of the lens is low and the degree of polarization in the lower region is high.

Fig. 4 shows a third embodiment of the polarizing lens according to the present invention, Fig. 4(a) is a schematic view showing a relationship between the position of the surface of the lens and the degree of polarization and Fig. 4(b) is a schematic view showing a relationship between the position of the surface of the lens and the film thickness of a polarizing layer.

As shown in Fig. 4(a), in the polarizing lens of the present embodiment, the degree of polarization in the A region is the highest, the degree of polarization is lowered as its surface extends to the B region and the degree of polarization from the B region to the C region is the lowest and constant. In other words, the polarizing lens of the present embodiment also includes, in the surface of the lens, a region in which the degree of polarization caused by the polarizing layer 11 continuously differs.

As shown in Fig. 4(b), in the polarizing lens of the present embodiment, the film thickness of the polarizing layer 11 in the A region is the largest, the film thickness is decreased as its surface extends to the B region and the film thickness of the polarizing layer 11 from the B region to the C region is the smallest and constant. In other words, the polarizing lens of the present embodiment also includes, in the surface of the lens, a region in which the film thickness of the polarizing layer 11 continuously differs. The change in the film thickness of the polarizing layer 11 shown in Fig. 4(b) as described above corresponds to the change in the degree of polarization caused by the polarizing layer 11 shown in Fig. 4(a) described above.

Fig. 5 shows a fourth embodiment of the polarizing lens according to the present invention, Fig. 5(a) is a schematic view showing a relationship between the position of the surface of the lens and the degree of polarization and Fig. 5(b) is a schematic view showing a relationship between the position of the surface of the lens and the film thickness of a polarizing layer.

As shown in Fig. 5(a), in the polarizing lens of the present embodiment, the degree of polarization from the A region to the B region is the highest and constant, the degree of polarization around the B region is gradually lowered and the degree of polarization in the C region is the lowest and constant. In other words, the polarizing lens of the present embodiment also includes, in the surface of the lens, a region in which the degree of polarization caused by the polarizing layer 11 continuously differs.

As shown in Fig. 5(b), in the polarizing lens of the present embodiment, the film thickness of the polarizing layer 11 from the A region to the B region is the largest and constant, the film thickness around the B region is gradually decreased and the film thickness of the polarizing layer 11 to the C region is the smallest and constant. In other words, the polarizing lens of the present embodiment also includes, in the surface of the lens, a region in which the film thickness of the polarizing layer 11 continuously differs. The change in the film thickness of the polarizing layer 11 shown in Fig. 5(b) as described above corresponds to the change in the degree of polarization caused by the polarizing layer 11 shown in Fig. 5(a) described above.

Even in any one of the polarizing lenses according to the second, third and fourth embodiments of the present invention as described above, the polarizing function differs depending on the regions of the surface of the lens, and thus satisfactory view is obtained, for example, both when eyeglass lenses are worn and a distant area is seen and when a near area such as an area within reach of a hand is seen. Since as shown in Figs. 3 to 5 described above, the degree of polarization caused by the polarizing layer 11 is continuously changed in the regions of the surface of the lens, when the lenses of the embodiments described above are worn as eyeglasses, discomfort in visibility caused by a step (boundary) of the degree of polarization is not caused, with the result that satisfactory view is obtained. The film thickness of the polarizing layer 11 is also continuously changed, and thus the appearance of the surface of the lens is satisfactory.

In the polarizing lens of each of the embodiments described above, the transmittance (luminous transmittance) in a wavelength region of 380 to 780 nm is preferably equal to or greater than 25%, and particularly preferably equal to or greater than 30%. As described previously, as the degree of polarization of the lens caused by the polarizing layer 11 is increased, the transmittance (luminous transmittance) of the lens is lowered, and thus it is preferable to satisfactorily achieve both the degree of polarization and the transmittance, in particular, in a region having a high degree of polarization. Hence, in terms of a preferable balance between the degree of polarization and the transmittance of the lens, the transmittance of the lens preferably falls in the range described above.

[Method for manufacturing polarizing lens]

A method for manufacturing the polarizing lens described above and according to the present invention will then be described.

The method for manufacturing the polarizing lens according to the present invention includes: forming the polarizing layer by the dip coating method; and dipping the lens base material in a polarizing pigment solution containing a polarizing pigment and then changing a raising speed when the lens base material is raised so as to form the polarizing layer in which the film thickness in the surface of the lens differs in a raising direction.

Fig. 8 is a schematic view of the dip coating method.

In the present invention, the dip coating method is applied to form the polarizing layer 11 on the lens base material 10.

As shown in Fig. 8, the lens base material 10 (the lens 1) is dipped in a coating liquid (polarizing pigment solution 8) stored in a liquid chamber 7, and then a coating layer is formed on the surface of the lens base material 10 in the process of raising the lens base material 10 held by a lens holder 6 upward from the liquid.

The present inventors have found that when the lens base material 10 is raised, the raising speed is changed to be able to form the polarizing layer 11 in which the film thickness in the surface of the lens differs in the raising direction. The present inventors have also found that it is desirable to raise the lens base material 10 at constant acceleration when the raising speed is changed. Specifically, the present inventors have found that it is possible to form the polarizing layer 11 in which the film thickness continuously differs in the surface of the lens by raising, when the raising speed is changed, the lens base material 10 at constant acceleration to change the raising speed.

Figs. 9(a) to 9(d) each are schemes (schematic views) showing relationships between the position of the surface of the lens and the speed of raising the lens in the embodiments of the present invention.

In the case of Fig. 9(a), the raising speed in the A region where the lens is first raised is the fastest, the raising speed is gradually lowered as its surface extends from the B region to the C region and the raising speed in the C region is the slowest. In the present embodiment, since the lens base material 10 is raised at constant acceleration and thus the raising speed is changed, the raising speed is linearly changed (lowered).

In the lens raising speed scheme as shown in Fig. 9(a), the polarizing lens of the first embodiment described previously and shown in Fig. 2 is formed. In other words, in the surface of the lens as shown in Fig. 2(b), the lens in which the film thickness of the polarizing layer 11 continuously differs is formed. In this way, in the surface of the lens as shown in Fig. 2(a), the lens in which the degree of polarization caused by the polarizing layer 11 continuously differs is formed.

In the case of Fig. 9(b), the raising speed in the A region where the lens is first raised is the slowest, the raising speed is gradually increased as its surface extends from the B region to the C region and the raising speed in the C region is the fastest. Even in the present embodiment, since the lens base material 10 is raised at constant acceleration and thus the raising speed is changed, the raising speed is linearly changed (increased). In the lens raising speed scheme as shown in Fig. 9(b), the polarizing lens of the second embodiment described previously and shown in Fig. 3 is formed.

In the case of Fig. 9(c), the raising speed in the A region where the lens is first raised is the fastest, the raising speed is gradually lowered as its surface extends to the B region and the raising speed from the B region to the C region is the slowest and constant. In the present embodiment, in the process of gradually lowering the raising speed as its surface extends to the B region, the lens base material 10 is raised at constant acceleration and thus the raising speed is changed. In the lens raising speed scheme as shown in Fig. 9(c), the polarizing lens of the third embodiment described previously and shown in Fig. 4 is formed.

In the case of Fig. 9(d), the raising speed from the A region to the B region is the fastest and constant, the raising speed around the B region is gradually lowered and the raising speed to the C region is the slowest and constant. In the present embodiment, in the process of gradually lowering the raising speed around the B region, the lens base material 10 is raised at constant acceleration and thus the raising speed is changed. In the lens raising speed scheme as shown in Fig. 9(d), the polarizing lens of the fourth embodiment described previously and shown in Fig. 5 is formed.

Although in terms of performing control to achieve the film thickness of the coating layer which makes it possible to obtain the desired gradient of the degree of polarization in the surface of the lens, the speed of raising the lens base material 10 is determined, since it is necessary to consider the influences of the type of polarizing pigment, the concentration of the polarizing pigment and the like, it is not necessarily appropriate to suggest that in the present invention, the lens base material 10 can be raised at, for example, a raising speed equal to or greater than 0.1 mm/second and equal to or less than 50 mm/second. For example, as the concentration of the polarizing pigment is reduced, the lens base material 10 can be raised at, for example, a raising speed equal to or greater than 0.1 mm/second and equal to or less than 100 mm/second.

Although in terms of performing control to achieve the film thickness which makes it possible to obtain the desired gradient of the degree of polarization in the surface of the lens, the film thickness of the polarizing layer 11 formed on the lens base material 10 by the method of the present invention is determined, since it is necessary to consider the influences of the type of polarizing pigment, the concentration of the polarizing pigment and the like, it is not necessarily appropriate to suggest that in the present invention, the film thickness of the polarizing layer 11 can be adjusted to be in a range of, for example, 0 (zero) to 5 $\mu$m. In particular, when the concentration of the polarizing pigment is reduced, it is easy to perform control to achieve the film thickness of the coating layer which makes it possible to obtain a larger gradient range of the degree of polarization in the surface of the lens. The lens base material 10 is raised as it is without a specific region of the surface of the lens base material 10 being dipped in the coating liquid, and thus the polarizing layer 11 is not formed in the region described above, with the result that the degree of polarization in the region described above can be set to 0% (no polarization).

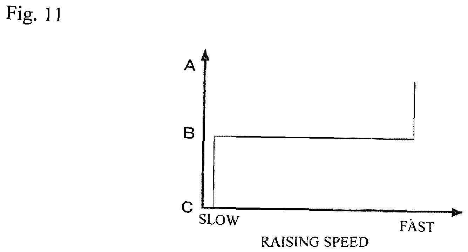

Fig. 11 is a scheme (schematic view) showing a relationship between the position of the surface of the lens and the speed of raising the lens in the reference example described previously.

In the case of Fig. 11, the raising speed from the A region to the B region is fast and constant, the raising speed in the B region is lowered at once and the raising speed to the C region is slow and constant. In the lens raising speed scheme as shown in Fig. 11, the polarizing lens of the reference example described previously and shown in Fig. 10 is formed. As described previously, in the case of the reference example shown in Fig. 10, the step of the film thickness of the polarizing layer 11 is made in the B region which is an approximate center of the surface of the lens, with the result that the appearance of the surface of the lens is not satisfactory. Discomfort in visibility is caused by the boundary of the degree of polarization.

The coating liquid (polarizing pigment solution 8) used in the dip coating method includes at least the polarizing pigment such as the dichroic pigment. In general, the polarization of the dichroic pigment is generated mainly by performing uniaxial orientation on the dichroic pigment. In order to perform uniaxial orientation on the dichroic pigment, it is preferable to perform rubbing processing which will be described later.

The "dichroic" in the dichroic pigment means a property in which since a medium has the anisotropy of selective absorption for light, the color of transmitted light differs depending on the direction of propagation. The dichroic pigment has a property in which light absorption is increased for polarization in a certain specific direction of a pigment molecule whereas light absorption is decreased in a direction orthogonal thereto. Among dichroic pigments, a dichroic pigment is known in which when water is used as a solvent, a liquid crystal state is generated at a certain concentration in a certain temperature range. The liquid crystal state as described above is called lyotropic liquid crystal. When the liquid crystal state of the dichroic pigment is utilized to be able to arrange pigment molecules in a specific direction, a more enhanced dichroic property can be generated. The top of the surface subjected to the rubbing processing is coated with the coating liquid containing the dichroic pigment, and thus it is possible to perform uniaxial orientation on the dichroic pigment, with the result that it is possible to form the polarizing layer having satisfactory polarization.

The dichroic pigment is not particularly limited, and various types of dichroic pigments which are generally used as polarizing members such as a polarizing lens can be mentioned as examples. Specific examples thereof include azo-based pigments, anthraquinone-based pigments, merocyanine-based pigments, styryl-based pigments, azomethine-based pigments, quinone-based pigments, quinophthalone-based pigments, perylene-based pigments, indigo-based pigments, tetrazine-based pigments, stilbene-based pigments, benzidine-based pigments and the like. Dichroic pigments disclosed in the specification of U.S. Patent No. 2400877, Japanese Unexamined Patent Application Publication (Translation of PCT Application) No. 2002-527786 and the like may be used; for example, a material may be used which is obtained by combining pleochroic pigment molecules and a molecular matrix having the property of lyotropic liquid crystal acquired by orienting and holding pleochroic pigment molecules in a predetermined direction.

As the coating liquid, a water-based coating liquid containing the dichroic pigment described above is preferably used. Although the coating liquid can be a solution or a suspension, the coating liquid is preferably a solution. The water-based coating liquid here refers to a liquid that includes a solvent whose main ingredient is water.

Although in the present invention, the concentration of the polarizing pigment such as the dichroic pigment in the coating liquid does not need to be particularly restricted, for example, the concentration can be set in a range equal to or greater than 1% by weight and equal to or less than 5% by weight. The concentration is finally determined in terms of performing control to achieve the film thickness of the coating layer which makes it possible to obtain the desired gradient of the degree of polarization in the surface of the lens. In particular, as the concentration of the polarizing pigment is reduced, the range of the gradient of the degree of polarization in the surface of the lens can be further increased, and thus the gradient of the degree of polarization is easily controlled.

In addition to the dichroic pigment, other ingredients may be included in the coating liquid. Examples of the other ingredient include a pigment other than the dichroic pigment. Furthermore, in terms of enhancing the coating property and the like, additives such as a rheology modification agent, an adhesion promoter, a plasticizer and a leveling agent may be mixed as necessary.

Although the liquid temperature of the coating liquid does not need to be particularly restricted in the present invention, the liquid temperature can be set in, for example, a range equal to or greater than 40° and equal or less than 80°.

As described above, in order to perform uniaxial orientation on the dichroic pigment, it is preferable to perform the rubbing processing. The top of the surface subjected to the rubbing processing is coated with the coating liquid containing the dichroic pigment. The rubbing processing is processing for providing orientation to a surface to be processed. Examples of the rubbing processing includes: a physical method in which a roll having nylon fibers implanted in its surface or a roll having rubbing cloth attached to its surface is used to be rotated on the surface to be processed so as to provide orientation; and a chemical method in which light of high energy such as UV light is applied to provide orientation. The rubbing processing is performed, for example, on the surface of the lens base material on which the polarizing layer is formed.

When a water-soluble pigment is used as the dichroic pigment, in order to enhance the stability of a coating film obtained by coating, it is preferable to perform water insoluble treatment after the coating of the coating liquid and the performance of dry treatment. The water insoluble treatment can be performed, for example, by performing the ion exchange of the terminal hydroxyl groups of dichroic pigment molecules or producing a chelated state between the dichroic pigment and metal ions. In order to do so, it is preferable to use a method for immersing the formed polarizing layer in a metal salt aqueous solution. Although the metal salt is not particularly limited, examples thereof include $AlCl_3$, $BaCl_2$, $CdCl_2$, ZnCh, $FeCl_2$, $SnCl_3$ and the like. After the water insoluble treatment, the surface of the polarizing layer may be further dried.

In order to enhance the strength and the stability of the film, immobilization treatment for the dichroic pigment can be performed on the formed polarizing layer. When a water-soluble pigment is used as the dichroic pigment, it is preferable to perform the immobilization treatment after the water insoluble treatment described above.

The immobilization treatment is preferably performed by performing silane coupling agent treatment on the surface of the polarizing layer. The silane coupling agent treatment can be performed by coating the surface of the polarizing layer with a silane coupling agent solution having a concentration of, for example, 1 to 15% by mass. As a solvent for preparing the silane coupling agent solution, an aqueous solvent is preferable. As the silane coupling agent, epoxysilane (epoxy group-containing silane coupling agent), aminosilane (amino group-containing silane coupling agent) or the like is preferable. As a method for applying the silane coupling agent solution, a known means such as the dip coating method, a spin coat method or a spray coating method can be used.

Although in the embodiments of the present invention described above, the configuration in which the polarizing layer 11 is provided on the lens base material 10 is described, the polarizing lens of the present invention is not limited to this configuration. Furthermore, in order to provide impact resistance, abrasion resistance, anti-reflection, water repellent treatment, anti-fog treatment and the like, functional layers such as a hard coat layer, anti-reflection layer, a water-repellent layer and an anti-fog layer can be included. A dimming layer (photochromic layer) is provided, and thus it is possible to provide a polarizing dimming lens.

<Hard coat layer>

The hard coat layer can provide scratch resistance to a plastic lens.

As a method for forming the hard coat layer, a method of coating, for example, the surface of the lens base material 10 with a curable composition such as by a spin coat method and curing the resulting coating film is generally used. Curing treatment is performed by heating, application of light or the like according to the type of curable composition.

Examples of the curable composition as described above preferably include: a photocurable silicone composition whose main ingredients are a silicone compound that receives the application of ultraviolet rays to generate a silanol group and organopolysiloxane that has a reactive group such as a halogen atom or an amino group undergoing condensation reaction with the silanol group; an acrylic ultraviolet curable monomer composition; an inorganic fine particle-containing thermosetting composition in which inorganic fine particles such as $SiO_2$ or $TiO_2$ are dispersed in a silane compound including a polymerizable group such as a vinyl group, an allyl group, an acrylic group or a methacrylic group and a hydrolytic group such as a methoxy group or a silane coupling agent; and the like. The composition of the hard coat layer is selected according to the material of the lens base material 10. The refractive index of the hard coat layer is, for example, equal to or greater than 1.45 and equal to or less than 1.74.

<Anti-reflection layer>

The anti-reflection layer generally has a multilayer structure in which layers of different refractive indices are stacked, and is a film for preventing the reflection of light by the action of interference. Examples of the material of the anti-reflection layer include inorganic substances such as $SiO_2$, SiO, $ZrO_2$, $TiO_2$, TiO, $Ti_2O_3$, $Ti_2O_5$,

$Nb_2O_5$, $Al_2O_3$, $Ta_2O_5$, $CeO_2$, MgO, $Y_2O_3$, $SnO_2$, $MgF_2$ and $WO_3$, and they can be used singly or two or more types thereof can be used together.

As an example of the anti-reflection layer as described above, a multilayer structure formed by stacking a low refractive index layer and a high refractive index layer is mentioned. The refractive index of the low refractive index layer is, for example, 1.35 to 1.80 at wavelengths of 500 to 550 nm. The refractive index of the high refractive index layer is, for example, 1.90 to 2.60 at wavelengths of 500 to 550 nm. The low refractive index layer is formed of, for example, silicon dioxide ($SiO_2$) having a refractive index of about 1.43 to 1.47. The high refractive index layer is formed of a material having a refractive index higher than the low refractive index layer, and is formed by using, for example, metal oxides such as niobium oxide ($Nb_2O_5$), tantalum oxide ($Ta_2O_5$), zirconium oxide ($ZrO_2$), yttrium oxide ($Y_2O_3$) and aluminum oxide ($Al_2O_3$) at an appropriate ratio.

When the material of the anti-reflection layer is the inorganic substance such as the metal oxide as described above, as a method for forming a film thereof, for example, vacuum deposition, an ion plating method, a sputtering method, a CVD method, a method of precipitating by a chemical reaction in a saturated solution or the like can be adopted.

<Dimming layer (photochromic layer)

The dimming layer can be formed by coating, for example, the top of the lens base material 10 with a dimming layer coating liquid including a photochromic pigment, a curable ingredient and the like and performing curing treatment on the resulting coating film.

The curable ingredient is not particularly limited, and known photopolymerizable monomers and oligomers having a radical polymerizable group such as a (meta) acryloyl group, a (meth) acryloyloxy group, a vinyl group, an allyl group or a styryl group and prepolymers thereof can be used.

As the photochromic pigment, a known one can be used, examples thereof include photochromic compounds such as a flugimid compound, a spirooxazine compound and a chromene compound and these photochromic compounds can be used without particular restriction. As the flugimid compound, the spirooxazine compound and the chromene compound, for example, compounds disclosed in Japanese Unexamined Patent Application Publication No. 2-28154, Japanese Unexamined Patent Application Publication No. 62-288830, the specification of WO94/22850, the specification of WO96/14596 and the like can be suitably used.

<Water-repellent layer >

The water-repellent layer contains, for example, a fluorine-containing silane compound (for example, a fluorine-substituted alkyl group-containing organosilicon compound). The water-repellent layer has a film thickness which is set to achieve an anti-reflection function together with the anti-reflection layer.

<Anti-fog layer>

The anti-fog layer may be further provided on the water-repellent layer. As an anti-fog agent included in the anti-fog layer, as long as substances form a hydrophilic region, the substances can be used without particular restriction. Examples thereof include: surfactants such as a fatty acid soap, an anionic surfactant such as alkylbenzene sulfonate, a cationic surfactant having a quaternary ammonium group, an amphoteric surfactant such as a long-chain alkyl amino acid and a nonionic surfactant such as polyoxyethylene nonylphenyl ether; hydrophilic monomers such as glycosylethyl methacrylate, methacrylic acid, acrylic acid, 2-hydroxylethyl methacrylate, acrylamide, N,N-dimethylacrylamide, N-vinylpyrrolidone, N-(2-methacloyloxyethyl)-2-pyrrolidone, hydroxyalkyl (meth) acrylates such as glyceryl methacrylate, polyethylene glycol methacrylate and polyethylene glycol acrylate, polyalkylene glycol mono (meth) acrylates, (meta) acrylamides and N-vinyl lactams; polymers formed of these monomers; and the like. As a hydrophilic substance, a silane coupling agent having an anionic hydrophilic group (for example, a sulfonic acid group), a hydrophilic monomer and a reactive surfactant having a reactive end group such as a vinyl group, an acrylic group, a methacryl group, a glycidyl group, an allyl group, an epoxy group, a mercapto group, a cyano group, an isocyano group or an amino group and a hydrophilic part such as a sulfone group, a hydroxyl group or ammonium chloride can be used.

Examples

The present invention will be more specifically described below using examples.

(Example 1)

As a lens base material, a meniscus-shaped polythiourethane lens (made by HOYA Corporation; the product name of "EYAS", a central wall thickness of 2.0 mm, a diameter of 75 mm and a surface curve (average value) in a convex surface of about + 0.8) was used.

The entire surface (convex surface) on one side of the lens base material was coated with a hard coat liquid including inorganic oxide particles and a silicon compound by spin coating, and was heated to be cured at 100°C for 60 minutes, and thus a hard coat layer having a thickness of 2 $\mu$m was formed.

Then, the lens base material on which the hard coat layer was formed was put into a vapor deposition device, and on the entire top surface of the hard coat layer, by a vacuum deposition method, an anti-reflection layer in which the layers of $SiO_2$-$ZrO_2$-$SiO_2$ were alter-

natively stacked and whose thickness was 0.5 μm was formed.

One-way rubbing processing was performed on the formed anti-reflection layer by rotating a roller wrapped with nylon in one direction while pressing the roller at a constant pressure.

<Preparation of coating liquid for formation of polarizing layer (polarizing pigment solution)>

A coating liquid for formation of a polarizing layer was prepared by diluting, with water, a water-soluble dichroic pigment (made by Sterling Optics Inc.; the product name of "Varilight solution 2S" and an aqueous solution having an active ingredient of about 4% by weight) and thereby setting the concentration of the dichroic pigment to 3% by weight.

<Formation of polarizing layer>

The coating liquid for formation of a polarizing layer prepared as described above was used to coat the top surface of the anti-reflection layer by the dip coating method so as to form a polarizing layer. The liquid temperature of the coating liquid at the time of coating was set to 50°C.

In the present example, according to the lens raising speed scheme shown in Fig. 9(a) described previously, in the A region where the lens was first raised, the raising speed was set to 20 mm/second, the lens was raised at constant acceleration and thus the raising speed was gradually lowered as its surface extends from the B region to the C region and the raising speed in the C region was set to 0.8 mm/second.

Then, water insoluble treatment was performed by preparing an aqueous solution having an iron chloride concentration of 0.15 moles and a calcium hydroxide concentration of 0.2 moles with a pH of 3.5, immersing the polarizing lens obtained above in this aqueous solution and then cleaning it.

After the water insoluble treatment, immobilization treatment was performed. The immobilization treatment was performed, for example, by coating the surface of the polarizing layer with a silane coupling agent solution having a concentration of about 1 to 15% by mass by dipping.

In the steps described above, the polarizing lens of example 1 having the hard coat layer, the anti-reflection layer and the polarizing layer on the lens base material in this order was obtained.

For the polarizing lens of example 1 obtained as described above, a luminous transmittance and the degree of polarization were measured by the following methods.

(1) Luminous transmittance

The luminous transmittance was measured according to "6. 6 Test Method for Polarizing Lens" of JIS T7333: 2005.

(2) Degree of polarization

According to ISO 8980-3, an ultraviolet-visible near-infrared spectrophotometer was used to determine a luminous transmittance ($T_{//}$) when the transmission axis of a polarizing element was parallel to linearly polarized light and a luminous transmittance ($T\perp$) when the transmission axis of the polarizing element was in an orthogonal direction, and the degree of polarization ($P_{eff}$) was calculated by the following formula and was evaluated. The luminous transmittance ($T_{//}$) and the luminous transmittance ($T\perp$) were measured with a visible spectrophotometer and a polarizer (Gran Thomson prism). Measurement light (in a wavelength range of 380 to 780 nm) was incident from the side of the convex surface of the lens.

$$P_{eff}\,(\%) = [(T_{//} - T_{\perp}) \,/\, (T_{//} + T_{\perp})] \times 100$$

In the present example, the polarizing layer was formed according to the lens raising speed scheme shown in Fig. 9(a) described previously, and thus the polarizing lens of the first embodiment shown in Fig. 2 described previously was obtained. In other words, the lens was obtained in which in the surface of the lens as shown in Fig. 2(b), the film thickness of the polarizing layer continuously differed. The film thickness of the polarizing layer was 0.83 μm in the A region where the film thickness was the largest and was 0.25 μm in the C region where the film thickness was the smallest. In this way, the lens was obtained in which in the surface of the lens as shown in Fig. 2(a), the degree of polarization caused by the polarizing layer continuously differed. The degree of polarization was the highest in the A region so as to be 92% and was the lowest in the C region so as to be 60%. The luminous transmittance of the lens of the present example in a wavelength region of 380 to 780 nm was equal to or greater than 30% even in the lowest region.

(Example 2)

In the present example, a polarizing lens was produced as in example 1 except that the polarizing layer was formed according to the lens raising speed scheme shown in Fig. 9(b) described previously by the dip coating method, and thus the polarizing lens of example 2 was obtained.

In the present example, in the A region where the lens was first raised, the raising speed was set to 0.1 mm/second, the lens was raised at constant acceleration and thus the raising speed was gradually increased as its surface extended from the B region to the C region and the raising speed in the C region was set to 20 mm/second.

In the present example, the polarizing layer was formed according to the lens raising speed scheme shown in Fig. 9(b) described previously, and thus the polarizing lens of the second embodiment shown in Fig. 3 described previously was obtained. In other words, the lens was obtained in which in the surface of the lens as shown in Fig. 3(b), the film thickness of the polarizing layer continuously differed. The film thickness of the polarizing layer was 0.10 μm in the A region where the film thickness was the smallest and was 0.90 μm in the C region where the film thickness was the largest. In this way, the lens was obtained in which in the surface of the lens as shown in Fig. 3(a), the degree of polarization caused by the polarizing layer continuously differed. The degree of polarization was the lowest in the A region so as to be 30% and was the highest in the C region so as to be 95%. The luminous transmittance of the lens of the present example in a wavelength region of 380 to 780 nm was equal to or greater than 30% even in the lowest region.

(Example 3)

In the present example, a polarizing lens was produced as in example 1 except that the polarizing layer was formed according to the lens raising speed scheme shown in Fig. 9(c) described previously by the dip coating method, and thus the polarizing lens of example 3 was obtained.

In the present example, in the A region where the lens was first raised, the raising speed was set to 30 mm/second, the lens was raised at constant acceleration and thus the raising speed was gradually lowered as its surface extended to the B region and the raising speed from the B region to the C region was set to a constant speed of 0.1 mm/second.

In the present example, the polarizing layer was formed according to the lens raising speed scheme shown in Fig. 9(c) described previously, and thus the polarizing lens of the third embodiment shown in Fig. 4 described previously was obtained. In other words, the lens was obtained in which in the surface of the lens as shown in Fig. 4(b), the film thickness of the polarizing layer continuously differed. The film thickness of the polarizing layer was 0.90 μm in the A region where the film thickness was the largest and was 0.20 μm from the B region where the film thickness was the smallest to the C region. In this way, the lens was obtained in which in the surface of the lens as shown in Fig. 4(a), the degree of polarization caused by the polarizing layer continuously differed. The degree of polarization was the highest in the A region so as to be 90% and was the lowest from the B region to the C region so as to be 25%. The luminous transmittance of the lens of the present example in a wavelength region of 380 to 780 nm was equal to or greater than 30% even in the lowest region.

(Example 4)

In the present example, a polarizing lens was produced as in example 1 except that the polarizing layer was formed according to the lens raising speed scheme shown in Fig. 9(d) described previously by the dip coating method, and thus the polarizing lens of example 4 was obtained.

In the present example, the raising speed was set to a constant speed of 20 mm/second from the A region to the B region, the lens was raised at constant acceleration around the B region and thus the raising speed was gradually lowered and the raising speed to the C region was set to a constant speed of 0.2 mm/second.

In the present example, the polarizing layer was formed according to the lens raising speed scheme shown in Fig. 9(d) described previously, and thus the polarizing lens of the fourth embodiment shown in Fig. 5 described previously was obtained. In other words, the lens was obtained in which in the surface of the lens as shown in Fig. 5(b), the film thickness of the polarizing layer continuously differed. The film thickness of the polarizing layer was 0.80 μm in the A region where the film thickness was the largest to the B region and was 0.10 μm to the C region where the film thickness was the smallest. In this way, the lens was obtained in which in the surface of the lens as shown in Fig. 5(a), the degree of polarization caused by the polarizing layer continuously differed. The degree of polarization was the highest from the A region to the B region so as to be 85% and was the lowest to the C region so as to be 10%. The luminous transmittance of the lens of the present example in a wavelength region of 380 to 780 nm was equal to or greater than 30% even in the lowest region.

(Example 5)

In the present example, a polarizing lens was produced as in example 1 except that a coating liquid for formation of a polarizing layer in which the concentration of the dichroic pigment was set to 2% by weight was used and that the polarizing layer was formed according to the lens raising speed scheme shown in Fig. 9(c) described previously by the dip coating method, and thus the polarizing lens of example 5 was obtained.

In the present example, in the A region where the lens was first raised, the raising speed was set to 10 mm/second, the lens was raised at constant acceleration and thus the raising speed was gradually lowered as its surface extended to the B region and the raising speed from the B region to the C region was set to a constant speed of 0.1 mm/second.

In the present example, the polarizing layer was formed according to the lens raising speed scheme shown in Fig. 9(c) described previously, and thus the polarizing lens of the third embodiment shown in Fig. 4 described previously was obtained. In other words, the lens was obtained in which in the surface of the lens as shown in Fig. 4(b), the film thickness of the polarizing layer continuously differed. The film thickness of the polarizing layer was 1.00 $\mu$m in the A region where the film thickness was the largest and was 0.18 $\mu$m from the B region where the film thickness was the smallest to the C region. In this way, the lens was obtained in which in the surface of the lens as shown in Fig. 4(a), the degree of polarization caused by the polarizing layer continuously differed. The degree of polarization was the highest in the A region so as to be 98% and was the lowest from the B region to the C region so as to be 22%. The luminous transmittance of the lens of the present example in a wavelength region of 380 to 780 nm was equal to or greater than 25% even in the lowest region.

In the present example, the coating liquid was used in which the concentration of the polarizing pigment was lower than in example 3 described above, and thus for example, as compared with example 3 described above, the range of the gradient of the degree of polarization in the surface of the lens was able to be further increased as described previously, with the result that the gradient of the degree of polarization was easily controlled. The range of the transmittance (luminous transmittance) of the lens which had a trade-off relationship with the degree of polarization of the lens was also increased.


(Reference example)


A polarizing lens was produced as in example 1 except that the polarizing layer was formed according to the lens raising speed scheme shown in Fig. 11 described previously by the dip coating method, and thus the polarizing lens of a reference example was obtained.

In the present reference example, the raising speed was set to a constant speed of 20 mm/second from the A region to the B region, in the B region, the raising speed was lowered to 0.2 mm/second at once and the raising speed to the C region was kept constant at 0.2 mm/second.

In the present reference example, the polarizing layer was formed according to the lens raising speed scheme shown in Fig. 11 described previously, and thus the polarizing lens of the reference example as shown in Figs. 10(a) and 10(b) described previously was obtained. As described previously, in the case of the reference example shown in Fig. 10, the step of the film thickness of the polarizing layer is present in an approximate center of the surface of the lens, and thus the boundary caused by the step is seen to be linear, with the result that the appearance of the surface of the lens is not satisfactory. Discomfort in visibility is caused by the discontinuous boundary of the degree of polarization.


Reference Signs List

| | |
|---|---|
| 1 | polarizing lens |
| 10 | lens base material |
| 11 | polarizing layer |
| 2 | eyeglass frame |
| 3 | reading part |
| 3a | reading power measurement reference point |
| 4 | distance part |
| 5 | horizontal line |
| 6 | lens holder |
| 7 | liquid chamber |
| 8 | polarizing pigment solution |
| 9 | progressive zone part |
| w | frame vertical width |

**Claims**

1. A polarizing lens including a polarizing layer on a lens base material, the polarizing lens comprising:
   a region in a surface of the lens, the region being such that a degree of polarization caused by the polarizing layer continuously differs.

2. A polarizing lens including a polarizing layer on a lens base material, the polarizing lens comprising:
   a region in a surface of the lens, the region being such that a film thickness of the polarizing layer continuously differs.

3. The polarizing lens according to claim 1 or 2,
   wherein the lens is a unifocal lens or a progressive power lens.

4. The polarizing lens according to any one of claims 1 to 3,
   wherein a degree of polarization in an upper region of the lens is higher than a degree of polarization in a lower region.

5. The polarizing lens according to any one of claims 1 to 4,
   wherein in a state where the lens is framed in an eyeglass frame, a degree of polarization of the lens in at least part of a lower third region in a vertical width from an upper end to a lower end of the frame is equal to or greater than 0% and less than 70%.

6. The polarizing lens according to any one of claims 1 to 5,
   wherein a transmittance of the lens in a wavelength region of 380 to 780 nm is equal to or greater than 25%.

7. A method for manufacturing a polarizing lens including a polarizing layer on a lens base material, the method comprising:

   forming the polarizing layer by a dip coating method; and
dipping the lens base material in a polarizing pigment solution containing a polarizing pigment and then changing a raising speed when the lens base material is raised so as to form the polarizing layer in which a film thickness in a surface of the lens differs in a raising direction.

8. The method for manufacturing a polarizing lens according to claim 7,
wherein the lens base material is raised at constant acceleration.

9. The method for manufacturing a polarizing lens according to claim 7 or 8,
wherein the lens base material is raised at the raising speed equal to or greater than 0.1 mm/second and equal to or less than 100 mm/second.

10. The method for manufacturing a polarizing lens according to any one of claims 7 to 9,
wherein a concentration of the polarizing pigment in the polarizing pigment solution is equal to or greater than 1% by weight and equal to or less than 5% by weight.

11. The method for manufacturing a polarizing lens according to any one of claims 7 to 10,
wherein a liquid temperature of the polarizing pigment solution is equal to or greater than 40° and equal to or less than 80°.

Fig. 1

Fig. 2

(a)

DEGREE OF POLARIZATION

(b)

POLARIZING LAYER FILM THICKNESS

Fig. 3

(a)

DEGREE OF POLARIZATION

(b)

POLARIZING LAYER FILM THICKNESS

Fig. 4

(a)

(b)

DEGREE OF POLARIZATION

POLARIZING LAYER FILM THICKNESS

Fig. 5

(a)

(b)

DEGREE OF POLARIZATION

POLARIZING LAYER FILM THICKNESS

Fig. 6

Fig. 7

Fig. 8

Fig. 9

(a)

(b)

(c)

(d)

Fig. 10

(a)

(b)

Fig. 11

## INTERNATIONAL SEARCH REPORT

| International application No. |
| --- |
| PCT/JP2020/012565 |

A. CLASSIFICATION OF SUBJECT MATTER
Int. Cl. G02C7/12(2006.01)i, G02B5/30(2006.01)i, G02C7/06(2006.01)i
FI: G02C7/12, G02C7/06, G02B5/30

According to International Patent Classification (IPC) or to both national classification and IPC

B. FIELDS SEARCHED

Minimum documentation searched (classification system followed by classification symbols)
Int. Cl. G02C7/12, G02B5/30, G02C7/06

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | US 2016/0282637 A1 (CARL ZEISS VISION INTERNATIONAL GMBH) 29 September 2016, paragraphs [0002], [0046], [0064], [0065], [0069], [0070], fig. 3 | 1-11 |
| X<br>A | Microfilm of the specification and drawings annexed to the request of Japanese Utility Model Application No. 133381/1985 (Laid-open No. 41126/1987) (NITTO ELECTRIC INDUSTRIAL CO., LTD.) 12 March 1987, page 3, line 19 to page 4, line 13, page 5, lines 18-20, page 6, lines 6-17 | 1, 3-6<br>2, 7-11 |
| X | JP 49-37545 B1 (YOSHIMURA, Masayoshi) 09 October 1974, column 1, line 20 to column 2, line 7, column 3, lines 16-22, column 4, lines 8-15 | 1, 3-6 |

☒ Further documents are listed in the continuation of Box C.          ☒ See patent family annex.

| | |
| --- | --- |
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02.06.2020 | Date of mailing of the international search report<br>09.06.2020 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**EP 3 951 485 A1**

**INTERNATIONAL SEARCH REPORT**

International application No.

PCT/JP2020/012565

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | CN 208188507 U (JIANGSU YOULI OPTICAL GLASSES CO., LTD.) 04 December 2018, paragraphs [0009]-[0011], fig. 1 | 2, 5-6<br>1, 3-4, 7-11 |
| A | JP 2012-181250 A (HOYA CORP.) 20 September 2012, paragraph [0019] | 1-11 |
| A | JP 2010-256584 A (FUJIFILM CORP.) 11 November 2010, paragraph [0021] | 1-11 |
| A | JP 5-215998 A (TOKYO KEIKAKU KK) 27 August 1993, paragraph [0006] | 1-11 |
| A | US 2017/0176775 A1 (CARL ZEISS VISION INTERNATIONAL GMBH) 22 June 2017, paragraphs [0024], [0037]-[0044] | 1-11 |

Form PCT/ISA/210 (continuation of second sheet) (January 2015)

**INTERNATIONAL SEARCH REPORT**
Information on patent family members

International application No.

PCT/JP2020/012565

| Patent Documents referred to in the Report | Publication Date | Patent Family | Publication Date |
|---|---|---|---|
| US 2016/0282637 A1 | 29.09.2016 | EP 3072672 A1<br>CN 106019630 A<br>KR 10-2016-0115688 A | |
| JP 62-41126 U1 | 12.03.1987 | (Family: none) | |
| JP 49-37545 B1 | 09.10.1974 | (Family: none) | |
| CN 208188507 U | 04.12.2018 | (Family: none) | |
| JP 2012-181250 A | 20.09.2012 | (Family: none) | |
| JP 2010-256584 A | 11.11.2010 | US 2012/0038858 A1<br>paragraph [0029]<br>WO 2010/123090 A1<br>TW 201100920 A<br>CN 102460282 A<br>KR 10-2012-0023688 A | |
| JP 5-215998 A | 27.08.1993 | (Family: none) | |
| US 2017/0176775 A1 | 22.06.2017 | EP 3185064 A1<br>CN 106896526 A | |

Form PCT/ISA/210 (patent family annex) (January 2015)

**EP 3 951 485 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5555688 B
- JP 2015069045 A
- JP 2014021466 A
- US 2400877 A
- JP 2002527786 W
- JP 2028154 A
- JP 62288830 A
- WO 9422850 A
- WO 9614596 A